# EUROPÄISCHE PATENTSCHRIFT

(11) **EP 1 136 234 B1**
(45) Veröffentlichungstag und Bekanntmachung des Hinweises auf die Patenterteilung: **02.01.2004**
(21) Anmeldenummer: 01107369.9
(22) Anmeldetag: 23.03.2001
(51) Int. Cl.: B29C 65/20, B29C 65/78

(54) **Verfahren und Vorrichtung zum Verschweissen von Kunststoffprofilstäben**
Process and apparatus for welding plastic profile bars
Procédé et dispositf pour souder des barres profilées en plastique

(30) Priorität: 23.03.2000 DE 10014168
(43) Veröffentlichungstag der Anmeldung: 26.09.2001
(73) Patentinhaber: Urban GmbH & Co. Maschinenbau KG, D-87700 Memmingen (DE)
(72) Erfinder: Tesch, Wolfgang, 87751 Heimertingen (DE); Kreissl, Reinhard, 87758 Kronburg (DE)
(74) Vertreter: Pfister, Helmut, Dipl.-Ing.

(56) Entgegenhaltungen:
- EP-A- 0 663 279
- DE-A- 2 614 208
- US-A- 5 527 406
- US-A- 5 753 065

## Beschreibung

Die Erfindung betrifft ein Verfahren und eine Vorrichtung zum Verschweißen von mindestens zwei Kunststoffprofilstäben zu einem Rahmenteil oder einem Rahmen, zum Beispiel für ein Fenster, eine Türe oder dergleichen, wobei zumindest ein Profilstab auf einem beweglich gelagerten Schlitten aufgespannt ist und ein Antrieb den Profilstab zunächst gegen ein Heizelement fördert und hernach zum Verschweißen gegen den zweiten Profilstab fördert und eine Steuerung das Verschweißen überwacht, wobei die Förderkraft des Antriebs durch die Steuerung überwacht und/oder geregelt wird.

Die vorgenannten Vorrichtungen, die das ebenfalls beschriebene Verfahren einsetzen, sind im Stand der Technik weit verbreitet. Sie dienen dazu, zum Beispiel aus Polyvenylchlorid (PVC)-profilen bestehende Rahmen, zum Beispiel für Fenster, herzustellen. Die Profile werden dabei auf Maß geschnitten und mit Gehrungsflächen ausgestattet in die Fensterschweißmaschine winklig, zum Beispiel rechtwinklig oder auch stumpf aneinanderstoßend, je nach Wunsch, eingelegt. Es sind dabei sehr einfache Maschinen bekannt, bei welchen nur ein Profilstab beweglich gelagert wird und der andere Profilstab festgespannt, unbeweglich ist. Es sind aber auch komfortable Maschinen bekannt, bei welchen vier Stäbe gleichzeitig zu einem Fenster- oder Türrahmen verschweißt werden, wobei dann alle Stäbe auf Schlitten beweglich gelagert sind. In der vereinfachten Ausgestaltung ist zumindest eine Steuerung für die Schweißzeit vorgesehen, um eine ausreichende Erwärmung der Profile an dem Heizelement zu erreichen. Komfortable und aufwendige Maschinen überwachen über die Steuerung den kompletten Schweißvorgang.

Beim Verschweißprozeß wird die zu verschweißende Fläche zunächst an einem Heizelement erhitzt. Dieser Vorgang wird als Angleichschritt bezeichnet. In der Verfahrenssteuerung wird dabei der Profilstab mit einer vom jeweiligen Antriebsmittel zur Verfügung gestellten Förderkraft gegen das Heizelement, welches zum Beispiel als Heizspiegel ausgebildet ist, gefördert. Die Steuerung überwacht dabei nur die zeitliche Abfolge der Schritte, das heißt, sie bestimmt den Anfang und das Ende der Bewegung, aber keine weiteren Einzelheiten während der Bewegung.

Während des Angleichschrittes wird die Schweißfläche erhitzt und ein gegebenfalls durch das Ablängen bestehendes Übermaß abgeschmolzen. Im Ergebnis soll ein stabiler und auch maßhaltiger Rahmen erhalten werden, weswegen für die Prozeßsteuerung die Einwirkzeit des Heizspiegels und dessen Temperatur, die Qualität des Rahmens, seine Stabilität und auch seine Maßhaltigkeit bestimmt. Aus vielen Versuchen sind empirische Werte bekannt, die regelmäßig eingesetzt werden und normalerweise zu vernünftigen Ergebnissen führen.

Nachdem die Schweißfläche erhitzt ist, üblicherweise erfolgt dies gleichzeitig an den jeweils zu verschweißenden Flächen beider Profilstäbe, werden die beiden zu verschweißenden Flächen aufeinanderzubewegt und der noch heiße, thermoplastische Werkstoff verbindet sich derart, daß eine Schweißverbindung entsteht. Die Qualität der Schweißverbindung und damit auch die Stabilität des Rahmens hängt dabei von verschiedenen Parametern ab, nämlich einer ausreichenden Temperatur des zu verschweißenden Materials, einer ausreichenden Fügekraft und auch eine ausreichende Zeitdauer, bis die Temperatur an der Verschweißungsstelle soweit abgesunken ist, daß das Material wieder aus dem plastischen in einen festen Aggregatszustand übergegangen ist. Die hier variierbaren Parameter sind für die verschiedenen Kunststoffprofiltypen, ebenfalls in empirischen Versuchen gefunden worden, so daß brauchbare Ergebnisse erreicht werden.

Aus der DE 195 06 236 A1 ist eine Vorrichtung zum Verschweißen von Kunststoffprofilen bekannt, durch die die Paßgenauigkeit beim Verschweißen der Kunststoffprofile insgesamt verbessert werden soll. Gemäß der vorgeschlagenen Lösung ist eine zweite Transporteinrichtung vorgesehen, die das zweite Kunststoffprofil entlang einer X-Koordinate bewegt.

Aus der EP 0 595 213 B1 ist eine Schweißeinrichtung zum Verschweißen von Kunststoffwerkstücken bekannt, wobei mit vertretbarem konstruktivem Aufwand einwandfreie Schweißergebnisse mit hoher Zuverlässigkeit erreicht werden sollen. Dabei ist zu beachten, daß die in der Antriebseinrichtung erzeugte Antriebskraft von in der Kraftwirkungs-Strecke vorhandenen verschiedenen Einflüssen herabgesetzt wird. Hieraus können schlechte Schweißergebnisse resultieren. Als solche Einflußgrößen werden aufgeführt: Alterung von Bauteilen, Defekte, unterschiedlicher Wirkungsgrad durch die Steuerung bei der Druckerzeugung. Die Kraftmeßeinrichtung ist mit einer Regeleinrichtung gekoppelt, die diese Einwirkungen sowohl erfaßt, als auch gleichzeitig das Meßergebnis einem dafür vorgegebenen Wert für den jeweils noch folgenden Prozeß hinzuaddiert. Ziel dieser Lösung ist es demnach dafür Sorge zu tragen, daß an den Werkstücken immer konstant die gleiche, jeweils vorgegebene Druckkraft anliegt.

Aus der Druckschrift US 5,753,065 ist ein Verfahren zum Verschweißen von mindestens zwei Kunststoffprofilstäben zu einem Rahmenteil (oder einem Rahmen, zum Beispiel einem Fenster, einer Türe oder dergleichen) bekannt, wobei zumindest ein Profilstab auf einem beweglich gelagerten Schlitten aufgespannt ist und ein Antrieb den Profilstab zunächst gegen ein Heizelement fördert und hernach zum Verschweißen gegen den zweiten Profilstab fördert und eine Steuerung das Verschweißen überwacht. Das Verschweißen unterschiedlicher Profiltypen und das variable Einstellen der Förderkraft in Abhängigkeit von der Profiltype ist in dieser Druckschrift nicht offenbart. Es bleibt daher ein Problem, mit einer Schweißvorrichtung, wie zuvor beschrieben, unterschiedliche Profiltypen nacheinander zu Verschweißen, ohne aufwendige Umrüstmaßnahmen beziehungsweise Einstellungen vornehmen zu müssen.

Aus der deutschen Offenlegungsschrift DE 26 14 208 ist es bekannt, daß die Anpreßkraft während des Schweißvorganges stufenlos verstellt werden kann. Diese Lösung beseitigt jedoch ein Problem, welches aus dem Stand der Technik zu dieser deutschen Offenlegungsschrift bekannt war, nämlich derart, daß eine vorher festgelegte und fest eingestellte Anpreßkraft auf die Profilstückchen eingebracht wurde, wodurch nach dem Plastifizieren des Materials während des Schweißvorganges ein nach außen aufgeworfener Wulst entstand, der dann an der Umgebungsluft sehr schnell erkaltete und somit den starren Rahmen abgibt. Die im Inneren noch weichen Teile des Schweißstückes beziehungsweise der Schweißstelle sind dabei nicht gut miteinander verbunden worden. Dieses Problem löste die deutsche Offenlegungsschrift DE 26 14 208. Es ist allerdings auch hier nicht vorgesehen, eine Schweißvorrichtung beziehungsweise ein Verfahren vorzusehen, derart, daß mit unterschiedlichen Verfahrensparametern auch unterschiedliche Profiltypen sicher untereinander verschweißbar sind.

Nun ergibt es sich aber, daß auf solchen Vorrichtungen nicht konstant nur ein Profiltyp verarbeitet wird, sondern daß in kurzer Folge die unterschiedlichsten Profiltypen zu verarbeiten sein sollen. Unterschiedliche Profiltypen führen aber zu unterschiedlich optimalen Verschweißungsparametern, die zu berücksichtigen sind. In der Regel werden in einem Industriebetrieb die entsprechenden optimalen Werte nicht eingestellt, das heißt, die Anlage nicht vollständig umgerüstet und es wird riskiert, daß die dann produzierten Rahmen unter Umständen eine eingeschränkte Qualität, weil eingeschränkte Stabilität, aufweisen. Dies ist immer dann der Fall, wenn die Auftragsgröße eine häufige Änderung der Profiltypen erfordert, der Aufwand zur häufigen Umrüstung jedoch in keinem Verhältnis zum zu erreichenden Ergebnis steht.

Die vorliegende Erfindung hat es sich zur Aufgabe gemacht, ein Verfahren und auch eine Vorrichtung wie eingangs beschrieben dahingehend zu verbessern, daß eine sichere und zuverlässige Rahmenherstellung ermöglicht wird und dadurch Rahmen mit hoher Güte und Qualität entstehen, derart, daß eine Möglichkeit zur variablen Beeinflussung mehrerer, den Schweißvorgang beieinflussender Größen, beispielsweise unterschiedliche Profiltypen, bereitgestellt wird.

Zur Lösung dieser Aufgabe geht die Erfindung aus von einem Verfahren beziehungsweise einer Vorrichtung wie eingangs beschrieben und schlägt vor, daß die Förderkraft während des Verschweißens variabel ist und von der Steuerung als Funktion der Profiltype eingestellt wird. Es ist gefunden worden, daß durch eine entsprechende Variabilität der Förderkraft des Antriebes die Schweißergebnisse beträchtlich beeinflußt werden können. Erfindungsgemäß wurde erkannt, daß die Förderkraft in Abhängigkeit einer oder mehrerer den Schweißvorgang beeinflussender Größen variabel gestaltet werden kann, um die Qualität der Schweißverbindung zu verbessern. Im Handel sind die unterschiedlichsten Profilquerschnitte bekannt, die, wenn sie mit der jeweils gleichen Kraft bearbeitet werden beziehungsweise verschweißt werden, zu unterschiedlichen Ergebnissen bei der Schweißverbindung führen, da der spezifische Anpreßdruck der Profile unterschiedlich ist und daraus auch unterschiedliche Schweißergebnisse resultieren müssen.

Der Schweißvorgang ist beim Verschweißen von Kunststoffprofilen derart gestaltet, daß die auf Länge geschnittenen Profile der Schweißeinrichtung zunächst zugeführt werden müssen. Mindestens zwei Profilstücke müssen an den späteren Schweißverbindungsstellen, zum Beispiel Gehrungen, auf die Schmelztemperatur erwärmt werden. Dies geschieht in der Regel an dafür vorgesehenen Heizspiegeln. Bereits beim Aufheizen der Profilstäbe sind unterschiedliche Parameter, entsprechend der jeweils gestellten Aufgabe, zu beachten. Dies wird später noch einmal ausführlicher beschrieben. Nach Erreichen der Schmelztemperatur muß zunächst das Heizelement aus dem Schweißbereich herausgefahren werden. Die zu verschweißenden Profilstäbe werden dazu etwas von den Heizelementen wegbewegt, um dann, nachdem sich das Heizelement nicht mehr im Schweißbereich befindet, wieder aufeinander zubewegt zu werden. Die beiden Seiten der Schweißverbindung sind noch derart plastifiziert, daß sie zu einer Verbindung zusammenfügbar sind. Die beiden Profilstäbe werden nunmehr aneinander geführt und mit Druck beaufschlagt. Dabei wurde erfindungsgemäß gefunden, daß es hierbei von Vorteil ist, wenn auch während des Zusammenpressens der Profilstäbe der Druck variiert wird. So ist es zum Beispiel von Vorteil, wenn der Druck auf die Profile während des Abkühlens des Plastwerkstoffes erhöht wird. Damit wird zum einen vermieden, daß die nicht zu verschweißenden Teile des Profils verformt werden, solange die Temperatur noch hoch ist. Zum anderen wird dadurch erreicht, daß durch die Erhöhung des Drucks in der Abkühlungsphase die Festigkeit der späteren Schweißverbindung erhöht wird. Ein weiterer Einflußfaktor für den gesamten Schweißvorgang ist die Profilgröße. Dabei hat die Profilgröße für den Schweißvorgang nicht nur Einfluß auf den spezifischen Anpreßdruck. Es ist beispielsweise für größere Profilquerschnitte eine höhere Energiemenge zur Erwärmung notwendig als für kleinere Profilquerschnitte. Diese Einflußgröße wird in der Regel dadurch gesteuert, daß die Heizdauer variiert wird und/oder ein unterschiedlicher Anpreßdruck für den Vorgang des Aufheizens gewählt wird. Eine weitere Einflußgröße für das Verschweißen ist durch das Material selbst gegeben. So sind unterschiedliche Materialien für Kunststoffprofile verschiedener Hersteller bekannt, die unterschiedliche Verschweißparameter erfordern. Dabei variieren die Temperatur, die Heizdauer, die notwendige Kraft, die ein sicheres Anliegen des Profilstabes an den Heizelementen während des Aufheizens sichert, und der notwendige Anpreßdruck für den späteren Fügeprozeß selbst. Durch den erfindungsgemäßen Vorschlag wird aber gerade ein für das Schweißen wichtiger Parameter unter Beachtung weiterer Einflußgrößen überwacht und geregelt und so den verschiedenen Profilen optimal angepaßt.

Wie im Stand der Technik beschrieben, hat es sich herausgestellt, daß es nicht ausreicht, partiell nur jeweils eine Einflußgröße des Schweißprozesses einzeln zu erfassen und auf einen vorher festgelegten Wert konstant zu regeln.

Die ermittelten Daten weren in einer Steuerung derart verarbeitet, daß, entsprechend des gerade laufenden funktionalen Ablaufs, beim Schweißprozeß die Förderkraft variabel gestaltet ist. Die Erfassung und Speicherung aller den Schweißprozeß beeinflussender Größen ist nunmehr ebenso möglich wie die Regelung, wobei es gelungen ist, mit Hilfe der erfindungsgemäß gefundenen Lösung von empirisch festgelegten Werten zu Werten zu kommen, die die Einf lußgrößen berücksichtigen. Es ist nunmehr möglich, mit einer Maschine ohne aufwendige Umbauarbeiten in kurzer Reihenfolge hintereinander unterschiedliche Profiltypen zu verarbeiten. Durch die Optimierung der Förderkraft des Antriebes während des Schweißprozesses werden Schweißverbindungen zur Verfügung gestellt, die allen Anforderungen gerecht werden. Das aufwendige Umrüsten von Anlagen beim Verarbeiten unterschiedlicher Profilquerschnitte entfällt.

Dabei ist die erfindungsgemäße Ausgestaltung nicht auf verhältnismäßig einfache Maschinen mit nur einem oder zwei bewegten Schlitten beziehungsweise Profilen beschränkt, sondern ist in gleicher Weise auch bei hochkomplexen Anlagen, bei welchen die vier Profile gleichzeitig verschweißt werden (bei sogenannten Vierkopf-Maschinen), einsetzbar.

Durch den erfindungsgemäßen Vorschlag derart, daß die Förderkraft des Antriebes durch die Steuerung überwacht und geregelt wird, eröffnen sich noch weitere Möglichkeiten.

Durch den erfindungsgemäßen Vorschlag wird nicht nur erreicht, daß ein Verfahren beziehungsweise eine Vorrichtung im Hinblick auf den schnell wechselnden Einsatz von unterschiedlichen Profilen optimiert wird, in gleicher Weise wird auch der Schweißvorgang bei einem bestehenden Profiltyp durch den erfindungsgemäßen Vorschlag verbessert. Beim Aufheizen der Schweißfläche des Profiles ist zunächst eine Kraft erforderlich, die ein sicheres, planes Anliegen der Schweißfläche am Heizelement ergibt. Entsprechend den bekannten Thermodiffusionsgleichungen dringt die Wärmeenergie im Profilstab vor und es ergibt sich ein Temperaturgradient in diesem Bereich. Erreicht die Materialtemperatur die Schmelztemperatur, so wird das Material plastisch und verformbar. Diese Plastizität kann beim Anwärmen von Nachteil sein, da dann das Material mit konstanter Kraft das plastisch gewordene Material verdrängt. In einem solchen Fall kann es günstig sein, eine niedrigere Kraft zu wählen. Alternativ ist es dann aber auch denkbar, daß dann eine höhere Kraft zu wählen ist, besonders dann, wenn überschüssiges Material wegzuschmelzen ist. Die Steuerung der Kraft erfolgt hierbei zum Beispiel aufgrund der Stellung des Profilstabes beziehungsweise des Schlittens, dabei ist es in gleicher Weise aber auch möglich, als Parameter der Zeit zum Beispiel die Aufwärmzeit oder Prozeßzeit einzusetzen.

In ähnlicher Weise ist es auch interessant, durch eine Variation der Förderkraft in Abhängigkeit der Position oder der Zeit den Fügeprozeß zu beeinflussen. Je nach Material und auch Profileigenschaften beziehungsweise der Ausbildung des Querschnittes mag es günstig sein, im Verlaufe des Fügeprozesses die Förderkraft (somit auch Fügekraft zwischen den beiden zu verschweißenden Profilen) zu erhöhen oder abzusenken.

Durch die erfindungsgemäße Ausgestaltung wird erreicht, daß hinlänglich bekannte empirische Daten für einige wenige Profile für den speziellen Anwendungszweck in einfacher Weise optimiert werden können, wodurch im Ergebnis bessere Qualität, das heißt, höher belastbare weil stabilere Rahmen erhalten werden.

Dabei ist nicht nur vorgesehen, daß werkseitig verschiedene Funktionsverläufe für die Förderkraft vorgegeben werden, sondern die Steuerung ist hinreichend intelligent ausgebildet, um neue Funktionsverläufe zu erlernen, diese sind also an der Steuerung einstellbar beziehungsweise abänderbar.

Die Steuerung verwaltet dabei die Förderkraft nach unterschiedlichen Kriterien. Zum einen ist eine Bezugnahme auf den jeweiligen Profiltyp von Vorteil, um auf den Profiltyp optimierte Verfahrensparameter einsetzen zu können. Im Schweißprozeß selber ist die Förderkraft an zwei Stellen einzusetzen, nämlich eine erste Förderkraft bei dem Anführen des Profilstabes gegen das Heizelement (Angleichschritt) und eine zweite Förderkraft für das Führen des Profiles gegen den anderen Profilstab (Fügeschritt). Sowohl die erste als auch die zweite Förderkraft sind dann bezogen auf den jeweiligen Profiltyp, zum Beispiel als Funktion der Position und/oder der Zeit in einem entsprechenden Register abgelegt. Als weiteres Unterscheidungsmerkmal ist dabei auch noch zu beachten, daß das gleiche Profil in unterschiedlichen Verschweißverfahren verarbeitet wird, wodurch sich eine weitere Varianz gibt.

In einer bevorzugten Ausgestaltung der Erfindung ist vorgesehen, daß die Förderkraft von der Steuerung als Funktion der Position des Antriebes und/oder als Funktion der Position des zu verschweißenden Profilstabes im Hinblick auf das Heizelement und/oder als Funktion der Position des zu verschweißenden Profilstabes im Hinblick auf den anderen Profilstab und/oder als Funktion der Schweißzeit bzw. Bearbeitungszeit eingestellt wird.

Es besteht eine Vielzahl von Kriterien, die bei der Prozeßsteuerung verwendet werden kann, um die Förderkraft während des Verschweißens, wie erfindungsgemäß vorgeschlagen, variabel zu gestalten. Dabei ist es von Vorteil, daß die jeweiligen Bewegungen so durch die Prozeßsteuerung überwacht werden und keine zusätzlichen Bauteile wie Sensoren usw. verwendet werden müssen, um den jeweiligen Prozeßschritt bzw. die Stellung des Profiles während des Verschweißprozesses zu überwachen.

Im Hinblick auf die Ausführung der Erfindung ist es dabei gleichwertig, ob nun die Steuerung die auf das Profil ausgeübte Förderkraft steuert, regelt und überwacht oder Parameter die mittel- oder unmittelbar von dieser physikalischen Größe ableitbar sind. Zum Beispiel ist es bei einer Ansteuerung des Antriebes durch einen Pneumatikzylinder einfacher, den Arbeitsdruck zu regeln, überwachen und zu steuern, wobei sich aber dann die resultierende Förderkraft aus einem Produkt der Querschnittsfläche des Kolbens und des Druckes in einfacher Weise ergibt. Ähnlicherweise ist natürlich auch von anderen Parametern auf die am Profil resultierende Förderkraft abzustellen. Zum Beispiel falls ein elektrischer Antrieb Verwendung findet, kann die an einem Widerstand abfallende Spannung, aufgrund des aufgenommenen Stromes des Antriebes, als Maß für die zu resultierende Förderkraft angesehen werden.

Die Komfortabilität einer erfindungsgemäßen Vorrichtung wird noch dadurch gesteigert, wenn die Förderkraft von der Steuerung als Funktion des Profiltyps eingestellt wird. Dabei ist vorgesehen, daß entweder eine manuelle Auswahl des jeweiligen Profiltyps in der Steuerung möglich ist, zum Beispiel durch Ansprechen eines entsprechenden Förderkraftdatensatzes, oder aber komfortabler, diese Information wird von dem System automatisch übernommen, zum Beispiel weil sie in einem Produktionsflußkonzept automatisch vorgegeben wird oder aber an der Vorrichtung Mittel zum Erkennen des Profiltyps angeordnet sind. Dies können zum Beispiel Bilderkennungsverfahren sein, die den Querschnitt entsprechend abtasten, oder aber Leseköpfe, die dazu geeignet sind, Barcodes oder Transponderinformationen, die an dem Profil angeordnet sind, auszulesen. In Abhängigkeit des Profiltyps wird dann eine entsprechender Förderkraftdatensatz zur Verfügung gestellt, wobei gegebenenfalls mehrere Förderkraftdatensätze für identische Profile hinterlegt sein können, unter welchen der Anwender dann noch auswählen kann.

Gemäß der Erfindung ist vorgesehen, daß der Funktionsverlauf der Förderkraft als diskrete Vorschrift zur Verfügung gestellt wird. Das bedeutet, daß für die Förderkraft beziehungsweise dem davon gesteuerten, abgeleiteten Parameter, zum Beispiel dem Druck, eine mathematische Beziehung vorgegeben wird, wobei als Operand zum Beispiel eine Zeitinformation oder eine Positionsinformation verwendet wird. Zum Beispiel ist es möglich, einen Teil einer Sinusbewegung oder einen linearen Zusammenhang einzusetzen. Alternativ ist es aber auch denkbar, daß die Steuerung eine Wertetabelle zur Verfügung stellt, zum Beispiel derart, daß vorgegeben wird, daß zu einer gewissen Zeit eine gewisse Kraft beziehungsweise ein gewisser Druck auf das Profil wirkt, welche/r dann zu einem anderen Zeitpunkt entsprechend verändert werden kann.

weitere bevorzugte Ausgestaltungen der Erfindung sind in den Unteransprüchen beschrieben. Die Erfindung ist schematisch in einem Blockschaltbild, gemäß der einzig beiliegenden Figur, beschrieben.

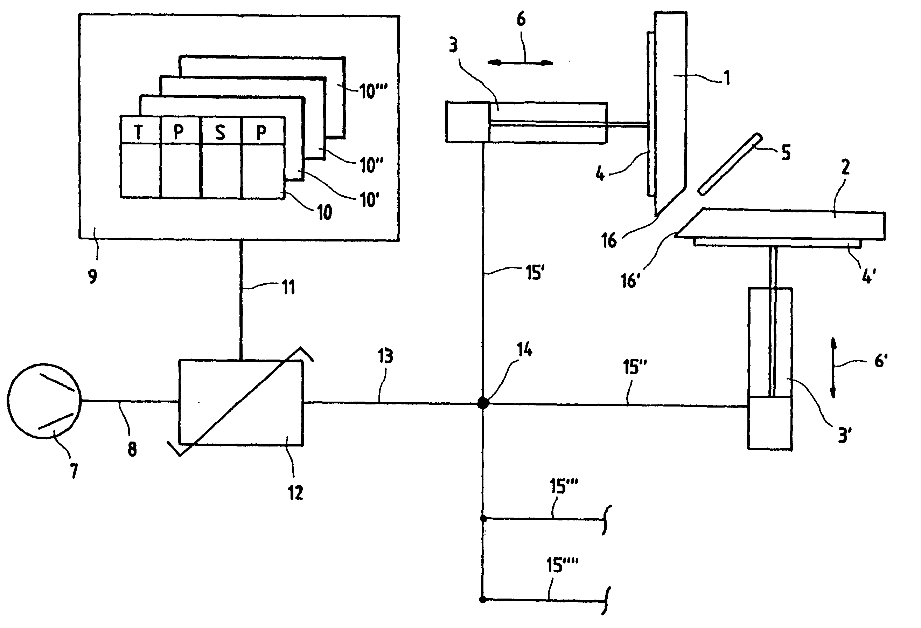

Die Verschweißstation einer erfindungsgemäßen Vorrichtung, in welcher das erfindungsgemäße Verfahren eingesetzt ist, ist im rechten Teil der Zeichnung schematisch angeordnet. Es handelt sich hierbei um einen Ausschnitt zum Verschweißen zweier Profile, eines ersten Profiles 1 mit einem zweiten Profil 2. Diese beiden Profile sind rechtwinklig zu ihrer Längserstreckung durch je einen Antrieb 3, 3' beweglich 6, 6' gelagert. Hierzu sind die beiden Profile 1, 2 auf jeweils eigenen Schlitten 4, 4' aufgespannt, die Spannmittel beziehungsweise Befestigungsmittel sind der Übersichtlichkeit halber hier nicht gezeigt. Die Verschweißstation ist in Ein-, Zwei- oder vierkopf-Maschinen im wesentlichen gleich.

Werden die beiden Arbeitszylinder beziehungsweise Antriebe 3, 3' aktiviert, so nähern sich ihre jeweiligen Gehrungsflächen 16, 16' einander an, wobei diese, nachdem sie zum Beispiel durch das Heizelement 5 erwärmt worden sind, durch eine entsprechende Annäherung dann miteinander verschweißt werden.

Als Antriebe 3 sind hierbei Pneumatikzylinder 3, 3' vorgesehen. Über die Kolbenstange des Pneumatikzylinders, der auf die Auflage beziehungsweise den Schlitten 4 wirkt, wird die Förderkraft auf das Profil 1, 2 übertragen.

Für den Antrieb der Pneumatikzylinder ist eine Hochdruckpneumatikanlage vorgesehen, die normalerweise aus einem windtank beziehungsweise einer Pumpe 7 besteht, die über eine Pneumatikhauptversorgungsleitung 8 die Vorrichtung mit Druckluft versorgt. Erfindungsgemäß wird vorgeschlagen, daß in der Pneumatikzuleitung ein Proportionalventil 12 angeordnet ist, durch welches die auf die Profile 1, 2 wirkende Kraft beziehungsweise der im Arbeitszylinder wirkende Druck einstellbar ist.

Gesteuert wird das Proportionalventil 12 über die Steuerleitung 11 von der Steuerung 9. Die Steuerung 9 ist hier sehr vereinfacht dargestellt, sie umfaßt eine Vielzahl von komplexen Funktionen, im vorliegenden soll aber nur der Einfluß der Steuerung 9 auf die Steuerung der Förderkraft beschrieben werden.

Neben den vorbeschriebenen Funktionalitäten der Steuerung soll hier nur eine Vielzahl von verschiedenen Förderkraftdatensätzen 10, 10', 10'', 10''' vorgesehen sein, die, je nach ausgewähltem Profiltyp der Profile 1, 2, von der Steuerung ausgewählt werden und die entsprechenden Werte von der Steuerung vorgegeben werden.

Der Förderkraftdatensatz 10 ist zum Beispiel mit einer Wertetabelle ausgestattet. Als t wird hierbei zum Beispiel die Zeitspalte, zum Beispiel während des Angleichens oder während des Fügens, definiert. Zum jeweiligen Zeitpunkt korrespondieren verschiedene Drücke (Spalte p) und damit auch verschiedene Förderkräfte. Die Steuerung besitzt dabei eine Uhr beziehungsweise mißt die Zeit für gewisse Verfahrensabschnitte (je nach Auslegung) und stellt, je nach Verfahrensablauf, einen größeren oder geringeren Druck über das Proportionalventil 12 zur Verfügung, wenn die Vorschrift (der Tabelle) eine entsprechende Änderung verlangt.

In ähnlicher Weise ist es auch möglich, daß der Druck beziehungsweise die Förderkraft über die Stellung s des Arbeitszylinders 3, des Schlittens 4 oder des Profiles 1, 2 verändert wird. Die zweite Tabelle s; p ist ebenfalls angedeutet. In diesem Fall sind zum Beispiel entsprechende Weg-Postition-Sensoren vorgesehen, die mit der Steuerung korrespondieren und entsprechende Werte zurückliefern, aufgrund derer die Steuerung entscheidet, ob der Druck p bei dem Erreichen einer gewissen Position s zu erhöhen oder zu verringern ist.

Erfindungsgemäß wird vorgeschlagen, daß das Proportionalventil 12 in der Hauptzuleitung 13, vor dem Verteiler 14, angeordnet ist. Dadurch wird erreicht, daß durch ein Proportionalventil 12 an allen daran angeschlossenen Arbeitszylindern die gleichen Konditionen, also die gleichen Förderkräfte, herrschen. Dadurch wird erreicht, daß der Bearbeitungsprozeß sehr homogen und gleichmäßig erfolgt, ohne daß bei dem Verschweißen Spannungen oder Ungleichförmigkeiten erreicht werden.

Alternativ ist es aber auch möglich, daß die verschiedenen Arbeitszylinder und damit auch die verschiedenen Profile jeweils mit eigenen Proportionalventilen angesteuert werden, wodurch natürlich eine höhere Variabilität möglich ist.

Die Proportionalventile sind bevorzugt als elektromagnetisch angetriebene Proportionalventile ausgeführt. Sie erlauben, aufgrund einer vorgegebenen Spannung oder Stromes, die exakte Ansteuerung eines gewünschten Druckes. Alternativ ist eine solche Ausgestaltung aber auch durch die Verwendung von hydraulischen Bauelementen möglich. Ebenso ist es möglich, einen elektromotorischen oder elektromagnetischen Antrieb zu wählen.

## Patentansprüche

1. Verfahren zum Verschweißen von mindestens zwei Kunststoffprofilstäben zu einem Rahmenteil, oder einem Rahmen, zum Beispiel für ein Fenster, eine Türe oder dergleichen, wobei zumindest ein Profilstab auf einem beweglich gelagerten Schlitten aufgespannt ist und ein Antrieb den Profilstab zunächst gegen ein Heizelement fördert und hernach zum Verschweißen gegen den zweiten Profilstab fördert und eine Steuerung das Verschweißen überwacht, wobei die Förderkraft des Antriebs durch die Steuerung überwacht und/oder geregelt wird, **dadurch gekennzeichnet, daß** die Förderkraft während des Verschweißens variabel ist und von der Steuerung als Funktion der Profiltype eingestellt wird.

2. Verfahren nach Anspruch 1, **dadurch gekennzeichnet, daß** die Förderkraft von der Steuerung als Funktion der Position des Antriebes und/oder als Funktion der Position des zu verschweißenden Profilstabes im Hinblick auf das Heizelement, und/oder als Funktion der Position des zu verschweißenden Profilstabes im Hinblick auf den anderen Profilstab und/oder als Funktion der Schweißzeit beziehungsweise Bearbeitungszeit eingestellt wird.

3. Verfahren nach Anspruch 1 und/oder 2, **dadurch gekennzeichnet, daß** der Funktionsverlauf der Förderkraft an der Steuerung einstellbar beziehungsweise änderbar ist.

4. Verfahren nach einem oder mehreren der vorhergehenden Ansprüche, **dadurch gekennzeichnet, daß** die Steuerung eine erste Förderkraft für das Anführen gegen das Heizelement und eine zweite Förderkraft für das Führen gegen den anderen Profilstab unterscheidet.

5. Verfahren nach einem oder mehreren der vorhergehenden Ansprüche, **dadurch gekennzeichnet, daß** die erste und/oder zweite Förderkraft, insbesondere auch als Funktion von weiteren Parametern als Förderkraftdatensatz, bezogen auf eine jeweilige Kunststoffprofiltype, insbesondere auch bezogen auf verschiedene Verschweißverfahren für das gleiche Kunststoffprofil, von der Steuerung gespeichert und verwaltet wird.

6. Verfahren nach einem oder mehreren der vorhergehenden Ansprüche, **dadurch gekennzeichnet, daß** die Steuerung anstelle einer Förderkraft einen auf die Förderkraft bezogenen Parameter, wie zum Beispiel den Arbeitsdruck eines Arbeitszylinders, eine elektrische Spannung und dergleichen, verwaltet.

7. Verfahren nach einem oder mehreren der vorhergehenden Ansprüche, **dadurch gekennzeichnet, daß** der Funktionsverlauf der Förderkraft als diskrete Vorschrift oder als Wertetabelle von der Steuerung zur Verfügung gestellt wird.

8. Vorrichtung zum Verschweißen von mindestens zwei Kunststoffprofilstäben zu einem Rahmenteil oder einem Rahmen, zum Beispiel für ein Fenster oder eine Türe oder dergleichen, wobei die Vorrichtung zumindest einen beweglich gelagerten Schlitten zum Aufspannen eines Profilstabes aufweist, wobei ein Antrieb den beweglich gelagerten Schlitten mit dem aufgespannten Profilstab gegen ein auf der Vorrichtung befindliches Heizelement und hernach gegen einen zweiten Schlitten mit aufgespanntem Profilstab zum Verschweißen fördert, wobei eine Steuerung (9) an der Vorrichtung angeordnet ist, die das Verschweißen und die Förderkraft überwacht, **dadurch gekennzeichnet, daß** die Steuerung (9) derart ausgebildet ist, daß die Förderkraft während des Verschweißens als Funktion der Profiltype variabel ist und daß die Steuerung die Förderkraft nach einem Verfahren gemäß einem oder mehreren der vorhergehenden Ansprüche überwacht.

9. Vorrichtung nach Anspruch 8, **dadurch gekennzeichnet, daß** die Steuerung (9) derart ausgebildet ist, daß die Steuerung die Förderkraft als Funktion der Position des Antriebs, als Funktion der Position des zu verschweißenden Profilstabes im Hinblick auf das Heizelement, als Funktion der Position des zu verschweißenden Profilstabes im Hinblick auf den anderen Profilstab und/oder als Funktion der Schweißzeit beziehungsweise Bearbeitungszeit überwacht beziehungsweise einstellt.

10. Vorrichtung nach einem oder mehreren der beiden vorhergehenden Ansprüche 8 und 9, **dadurch gekennzeichnet, daß** als Antrieb ein Pneumatikzylinder (3, 3') vorgesehen ist, und die Steuerung (9) als von der Förderkraft abgeleiteten Parameter den Arbeitsdruck des Pneumatikzylinders (3, 3') überwacht beziehungsweise regelt.

11. Vorrichtung nach einem oder mehreren der Ansprüche 8 bis 10, **dadurch gekennzeichnet, daß** in der Pneumatikzuleitung (8, 13) ein Proportionalventil (12), insbesondere ein elektromagnetisch betätigtes Proportionalventil vorgesehen ist, auf welches die Steuerung (9) wirkt und den Arbeitsdruck beziehungsweise die Förderkraft regelt.

12. Vorrichtung nach einem oder mehreren der vorhergehenden Ansprüche 8 bis 11, **dadurch gekennzeichnet, daß** die Vorrichtung zwei, drei oder vier Profilstäbe (1, 2) gleichzeitig verschweißt und die Steuerung (9) die Bewegung der Profilstäbe (1, 2) überwacht.

13. Vorrichtung nach einem oder mehreren der vorhergehenden Ansprüche 8 bis 12, **dadurch gekennzeichnet, daß** das Proportionalventil (12) in der zentralen Pneumatikzuleitung (8, 13) vorgesehen ist und eine Aufteilung der Zuleitung auf die einzelnen Antriebe nach dem Proportionalventil (12) erfolgt.

14. Vorrichtung nach einem oder mehreren der vorhergehenden Ansprüche 8 bis 13, **gekennzeichnet durch** einen hydraulischen oder elektromagnetischen Antrieb.

## Claims

1. Method for fusing at least two plastic profile rods into a frame part or a frame, for example for a window, a door or the like, at least one profile rod being clamped on a slide which is supported movably and a drive conveying the profile rod against a heating element for the time being and after that conveying it to the second profile rod for fusing and a control monitoring the fusing, the conveying power of the drive being monitored and/or controlled by the control, **characterised in that** the conveying power is variable during the fusing and is adjusted by the control as function of the profile type.

2. Method according to claim 1, **characterised in that** the conveying power is adjusted by the control as function of the position of the drive and/or as function of the position of the profile rod which has to be fused with regard to the heating element, and/or as function of the profile rod which has to be fused with regard to the other profile rod and/or as function of the fusing time, respectively working time.

3. Method according to claim 1 and/or 2, **characterised in that** the function course of the conveying power can be adjusted, respectively altered, at the control.

4. Method according to one or more of the preceding claims, **characterised in that** the control distinguishes between a first conveying force for the guiding against the heating element and a second conveying force for the guiding against the other profile rod.

5. Method according to one or more of the preceding claims, **characterised in that** the first and/or second conveying force, in particular also as function of other parameters as conveying force data record, with reference to a respective plastic profile type, in particular also with reference to different fusing methods for the same plastic profile, is stored and managed by the control.

6. Method according to one or more of the preceding claims, **characterised in that** the control manages instead a conveying force a parameter which refers to the conveying force, like for example the working pressure of a working cylinder, an electric voltage and the like.

7. Method according to one or more of the preceding claims, **characterised in that** the function course of the conveying power is made available as discrete regulation or as value table by the control.

8. Device for fusing of at least two plastic profile rods to a frame part or a frame, for example for a window or a door or the like, the device having at least one slide supported movably for clamping the profile rod, a drive conveying the slide, which is supported movably, with the clamped profile rod against a heating element located on the device and, after that, against a second slide with a clamped profile rod in order to fuse, a control (9) being arranged at the device which monitors the fusing and the conveying power, **characterised in that** the control (9) is designed in such a way that the conveying power is variable during the fusing as function of the profile type and that the control monitors the conveying power according to a method according to one or more of the preceding claims.

9. Device according to claim 8, **characterised in that** the control (9) is designed in such a way that the control monitors, respectively adjusts, the conveying power as function of the position of the control, as function of the position of the profile rod which has to be fused with regard to the heating element, as function of the position of the profile rod which has to be fused with regard to the other profile rod and/or as function of the fusing time, respectively working time.

10. Device according to one or both of the preceding claims 8 and 9, **characterised in that** a pneumatic cylinder (3, 3') is provided as drive, and the control (9) as parameter derived from the conveying force monitors, respectively adjusts, the working pressure of the pneumatic cylinder (3, 3').

11. Device according to one or more of the preceding claims 8 to 10, **characterised in that** in the pneumatic supplying pipe (8, 13) a proportional valve (12), in particular an electro-magnetically controlled proportional valve, is provided, which the control (9) acts on and adjusts the working pressure, respectively the conveying power.

12. Device according to one or more of the preceding claims 8 to 11, **characterised in that** the device simultaneously fuses two, three or four profile rods (1, 2) and the control (9) monitors the movement of the profile rods (1, 2).

13. Device according to one or more of the preceding claims 8 to 12, **characterised in that** the proportional valve (12) is provided in the central pneumatic supply pipe (8, 13) and the supply pipe is proportioned to the individual drives after the proportional valve (12).

14. Device according to one or more of the preceding claims 8 to 13, **characterised by** a hydraulic or electromagnetic drive.

## Revendications

1. Procédé de soudage d'au moins deux profilés en matière plastique destiné à former un élément d'un cadre ou un cadre complet, par exemple une fenêtre, une porte ou une structure similaire, dont au moins un profilé, fixé sur un coulisseau mobile, est via une commande d'abord dirigé contre un élément chauffant puis contre le deuxième profilé pour son soudage avec celui-ci, le soudage ainsi que la force d'avancement de la commande étant surveillés et/ou réglés par un système de contrôle, **caractérisé en ce que** la force d'avancement agissant pendant le soudage peut varier et **en ce qu'**elle est pré-réglée par le système de contrôle en fonction du type de profilé utilisé.

2. Procédé selon la revendication 1, **caractérisé en ce que** la force d'avancement est ajustée par le système de contrôle en fonction de la position de la commande et/ou en fonction de la position du profilé à souder par rapport à l'élément chauffant et/ou en fonction de la position du profilé à souder par rapport à la position de l'autre profilé et/ou en fonction du temps de soudage ou du temps de l'ensemble du procédé.

3. Procédé selon la revendication 1 et/ou 2, **caractérisé en ce que** la variation de la force d'avancement peut être modifiée et réglée au niveau du système de contrôle.

4. Procédé selon l'une ou plusieurs des revendications précédentes, **caractérisé en ce que** le système de contrôle distingue une première force d'avancement nécessaire au déplacement du profilé contre l'élément chauffant d'une deuxième force d'avancement déplaçant le premier profilé contre le deuxième profilé.

5. Procédé selon l'une ou plusieurs des revendications précédentes, **caractérisé en ce que** la première et/ou la deuxième force d'avancement sont enregistrées et gérées par le système de contrôle et ceci, en particulier, en fonction d'autres paramètres organisés dans une table de données et en fonction des types de profilés utilisés et plus particulièrement, en fonction des procédés de soudage utilisés pour le même profilé en matière plastique.

6. Procédé selon l'une ou plusieurs des revendications précédentes, **caractérisé en ce que** le système de contrôle gère à la place de la force d'avancement un paramètre lié à cette force comme la pression de travail d'un piston, la tension électrique ou d'autres paramètres similaires.

7. Procédé selon l'une ou plusieurs des revendications précédentes, **caractérisé en ce que** la modification de la force d'avancement est rendue accessible par le système de contrôle sous forme d'un protocole à valeurs discrètes ou sous forme d'un tableau de valeurs.

8. Dispositif de soudage d'au moins deux profilés en matière plastique destiné à former un élément d'un cadre ou un cadre complet, par exemple une fenêtre, une porte ou une structure similaire, possédant au moins un coulisseau sur lequel est fixé un profilé, les deux étant via une commande d'abord dirigés contre un élément chauffant situé sur le dispositif puis contre un deuxième coulisseau sur lequel est fixé un deuxième profilé pour le soudage des deux profilés, le soudage ainsi que la force d'avancement de la commande étant surveillé par un système de contrôle (9) situé sur le dispositif, **caractérisé en ce que** le système de contrôle (9) est configuré de telle façon que la force d'avancement agissant pendant le soudage peut varier en fonction du type de profilé utilisé et **en ce que** le système de contrôle surveille la force d'avancement suivant le procédé selon l'une ou plusieurs des revendications précédentes.

9. Dispositif selon la revendication 8, **caractérisé en ce que** le système de contrôle (9) possède une configuration telle qu'elle permet d'ajuster la force d'avancement en fonction de la position de la commande, de la position du profilé à souder par rapport à l'élément chauffant, de la position du profilé à souder par rapport à la position de l'autre profilé et/ou en fonction du temps de soudage ou du temps de l'ensemble du procédé.

10. Dispositif selon une ou deux des revendications précédentes 8 et 9, **caractérisé en ce qu'**un vérin pneumatique (3, 3') forme la commande et **en ce que** le système de contrôle (9) surveille et ajuste un paramètre lié à la force d'avancement, c'est-à-dire la pression du vérin pneumatique (3, 3').

11. Dispositif selon une ou plusieurs des revendications 8 à 10, **caractérisé en ce qu'**une valve de régulation proportionnelle (12) et en particulier une valve à commande électromécanique est située dans le tuyau pneumatique (8, 13) conduisant l'air au vérin, commandée par le système de contrôle (9) qui règle la pression d'air dans le vérin et ainsi la force d'avancement.

12. Dispositif selon une ou plusieurs des revendications précédentes 8 à 11, **caractérisé en ce que** le dispositif permet de souder simultanément deux, trois ou quatre profilés (1, 2) et **en ce que** le système de contrôle (9) surveille le mouvement des profilés (1, 2).

13. Dispositif selon une ou plusieurs des revendications précédentes 8 à 12, **caractérisé en ce que** la valve de régulation proportionnelle (12) est située dans le tuyau d'amenée central pneumatique (8, 13) et **en ce que** la séparation des tuyaux d'amenée vers les différentes commandes est située après la valve de régulation proportionnelle (12).

14. Dispositif selon une ou plusieurs des revendications précédentes 8 à 13, **caractérisé par** l'utilisation d'une commande hydraulique ou électromécanique.
